# FASCICULE DE BREVET EUROPEEN

(11) **EP 1 021 338 B1**
(45) Date de publication et mention de la délivrance du brevet: **03.04.2002**
(21) Numéro de dépôt: 98947605.6
(22) Date de dépôt: 06.10.1998
(51) Int. Cl.: B65B 31/04, B65B 31/02

(54) **DISPOSITIF DE CONDITIONNEMENT SOUS ATMOSPHERE CONTROLEE DE PRODUITS DANS LES EMBALLAGES OPERCULES PAR UN FILM**
VORRICHTUNG ZUM KONDITIONIEREN IN EINER KONTROLLIERTEN ATMOSPHÄRE VON PRODUKTEN IN MIT EINER FOLIE VERSIEGELTEN BEHÄLTERN
DEVICE FOR PACKAGING PRODUCTS UNDER CONTROLLED ATMOSPHERE IN PACKAGES SEALED WITH A FILM

(30) Priorité: 06.10.1997 FR 9712431
(43) Date de publication de la demande: 26.07.2000
(73) Titulaire: ROSSI, Jean-Pierre, F-93190 Livry-Gargan (FR); ROSSI, Marie-Jose, F-93190 Livry-Gargan (FR)
(72) Inventeur: ROSSI, Jean-Pierre, F-93190 Livry-Gargan (FR); ROSSI, Marie-Jose, F-93190 Livry-Gargan (FR)
(74) Mandataire: Casalonga, Axel
(86) Numéro de dépôt international: FR9802126
(87) Numéro de publication internationale: WO9917990

(56) Documents cités:
- WO-A-91/03400
- US-A- 4 624 099
- US-A- 5 271 207

## Description

La présente invention se rapporte à un dispositif d'operculage pour une machine de conditionnement sous atmosphère contrôlée de produits tels que des produits alimentaires dans des récipients tels que des barquettes, pots et emballages analogues operculés par un film.

Le conditionnement de produits alimentaires et autres dans de tels emballages operculés est réalisé sur des machines dites "operculeuses" ou "thermoformeuses-operculeuses", selon que les récipients à operculer sont réalisés soit préalablement sur une autre machine, soit par thermoformage par exemple d'une pellicule de matière thermoplastique sur la même machine que celle effectuant l'operculage. Il est souvent nécessaire, notamment lors du conditionnement de produits alimentaires ou de produits pharmaceutiques, en vue d'une meilleure conservation, protection et/ou hygiène, d'effectuer l'operculage sous vide ou sous atmosphère contrôlée, ce qui implique une extraction de l'air et/ou une injection de gaz.

Une solution connue et couramment utilisée consiste à effectuer l'extraction de l'air et/ou l'injection de gaz par des trous pratiqués sur les côtés du film d'operculage, le long des chaînes d'entraînement. Cela permet certes d'établir dans les emballages une atmosphère bien contrôlée, mais entraîne une perte non négligeable de film d'operculage, ce dernier devant être de largeur nettement supérieure à celle des récipients à operculer.

D'autres solutions proposées jusqu'à présent à cet effet (voir par exemple les documents US-A-4 162 599, US-A-4 624 099, US-A-5 271 207, WO 96/09210 qui correspondent à l'état de la technique selon le préambule de la revendication 1) sont compliquées et onéreuses et ne donnent néanmoins pas entière satisfaction. En particulier, elles ne permettent pas de réaliser une étanchéité satisfaisante de l'enceinte créée autour du récipient à operculer, notamment au niveau du système d'extraction d'air et/ou d'injection de gaz de balayage entre le film d'operculage et le récipient à operculer.

D'un autre côté, jusqu'à présent, il n'est pas possible de remplir de liquide complètement, à ras bords, les récipients destinés à être operculés, dans la mesure où le remplissage s'effectue à un poste situé en amont du poste d'operculage et que le récipient rempli non encore operculé est transféré du poste de remplissage au poste d'operculage, ce qui implique un mouvement qui provoque la formation d'une vague à la surface du produit contenu dans le récipient. C'est la raison pour laquelle on ne remplit jusqu'à présent les récipients que partiellement, afin que la vague qui se forme lors du transfert ne permette pas au produit de déborder du récipient ou d'atteindre et de souiller le bord supérieur du récipient, ce qui empêcherait une soudure du film d'operculage sur le récipient.

La présente invention vise un dispositif d'operculage pour une machine de conditionnement dans des récipients operculés, dispositif qui, tout en étant de structure particulièrement simple et fiable, assure une étanchéité parfaite de l'enceinte dans laquelle a lieu le soudage de l'opercule sur le récipient, permettant ainsi la création, dans le récipient operculé, d'une atmosphère mieux contrôlée que jusqu'à présent.

L'invention vise par ailleurs un dispositif d'operculage pour une machine de conditionnement dans des récipients operculés, qui permet un remplissage complet des récipients sans que le produit contenu dans le récipient risque de souiller le bord supérieur du récipient et de compromettre la soudure de l'opercule sur le récipient.

Le dispositif d'operculage, objet de l'invention, est destiné à une machine de conditionnement de produits sous atmosphère contrôlée dans des récipients tels que des barquettes, pots et récipients analogues operculés par un film. Il est défini dans la revendication 1. Ce dispositif comprend une partie supérieure formant cloche munie d'une tête de soudage, et une partie inférieure formant cuve. La partie inférieure reçoit au moins un récipient à operculer et coopère avec la partie supérieure de manière à définir, autour du récipient à operculer, une enceinte dans laquelle du film d'operculage continu préalablement amené sur le récipient est soudé sur le récipient par la tête de soudage de la partie supérieure. Selon l'invention, la partie supérieure comprend, dans une paroi, sur le côté d'amenée du film d'operculage, une fente de passage pour le film d'operculage, des moyens d'obturation et de blocage à actionnement commandé pour obturer ladite fente et bloquer le film par rapport à la partie supérieure, et des moyens d'introduction et/ou d'extraction de fluide, débouchant à l'intérieur de l'enceinte entre ladite fente et le bord inférieur de ladite paroi.

Lesdits moyens d'obturation et de blocage peuvent être constitués, de préférence, par un tuyau gonflable disposé sur ladite paroi, d'un côté de ladite fente. Ledit tuyau gonflable est avantageusement monté dans un trou s'étendant dans ladite paroi sur toute la largeur de ladite fente, de telle manière que ladite fente soit sécante audit trou.

Lesdits moyens d'introduction et/ou d'extraction de fluide peuvent comprendre des orifices d'injection de gaz, des orifices d'extraction de gaz et/ou des orifices ou becs de remplissage du récipient au poste d'operculage.

Dans la mesure où, sur la plupart des operculeuses ou thermoformeuses, la partie supérieure du poste d'operculage comprend, en vue de l'adaptation à des récipients de tailles et de formes différentes, une plaque de montage sur laquelle peuvent être rapportés, sélectivement, des têtes de soudage de formes et de tailles différentes et des cadres de formes et de tailles différentes, s'étendant autour de la tête de soudage, ladite paroi qui est traversée par la fente susceptible d'être obturée par actionnement commandé desdits moyens d'obturation et de blocage, fait avantageusement partie d'un cadre susceptible d'être rapporté sur la partie supérieure, autour de la tête de soudage, en lieu et place d'un cadre usuel.

En se référant aux dessins schématiques annexés, on va décrire ci-après plus en détail un mode de réalisation illustratif et non limitatif d'un dispositif d'operculage conforme à l'invention; sur les dessins :
la figure 1 est une coupe schématique d'un dispositif conforme à l'invention pour l'operculage de barquettes;
la figure 2 est une coupe partielle, à plus grande échelle, de la zone d'obturation et de blocage du dispositif de la figure 1, en position avant soudage;
la figure 3 est une coupe analogue à celle de la figure 2, en position de soudage.

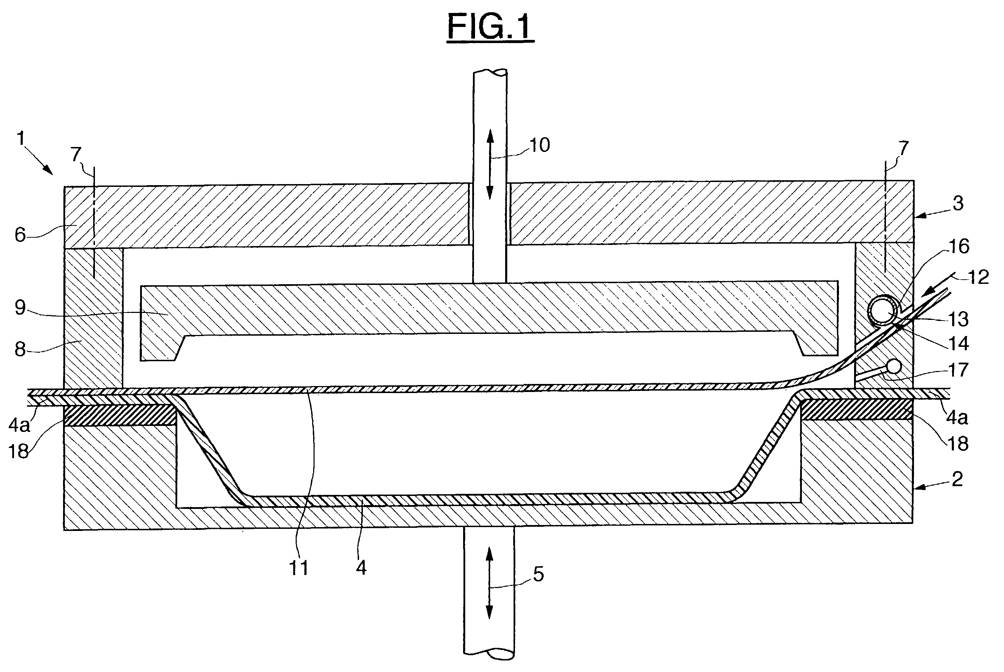

Selon la figure 1, le dispositif d'operculage 1 d'une machine de conditionnement de produits, notamment de produits alimentaires, dans des barquettes thermoformées operculées à l'aide d'un film soudé, ce dispositif faisant ici partie d'une thermoformeuse-operculeuse, comprend une partie inférieure 2 en forme de cuve ou de moule et une partie supérieure 3 en forme de cloche.

La partie inférieure 2 qui est destinée à recevoir la barquette 4 à operculer, est mobile verticalement en va-et-vient, comme indiqué par une flèche 5, sous l'action d'une commande non représentée.

La partie supérieure 3 est fixe et comprend une plaque de montage 6 sur la face inférieure de laquelle est fixé, à l'aide de vis dont seuls les axes 7 sont représentés, un cadre 8 entourant une tête de soudage 9. La tête de soudage 9 est mobile verticalement en va-et-vient par rapport à la plaque 6, comme indiqué par une flèche 10, sous l'action d'une commande non représentée.

Les deux parties 2 et 3, lorsqu'elles sont rapprochées l'une de l'autre par montée de la partie inférieure 2 contre la partie supérieure 3, définissent une enceinte dans laquelle un film d'operculage 11 continu retiré d'une bobine de réserve non représentée et amené au poste d'operculage 1 dans le sens de la flèche 12 pour être posé par-dessus la barquette 4, est soudé sur les bords 4a de la barquette 4 à l'aide de la tête de soudage 9.

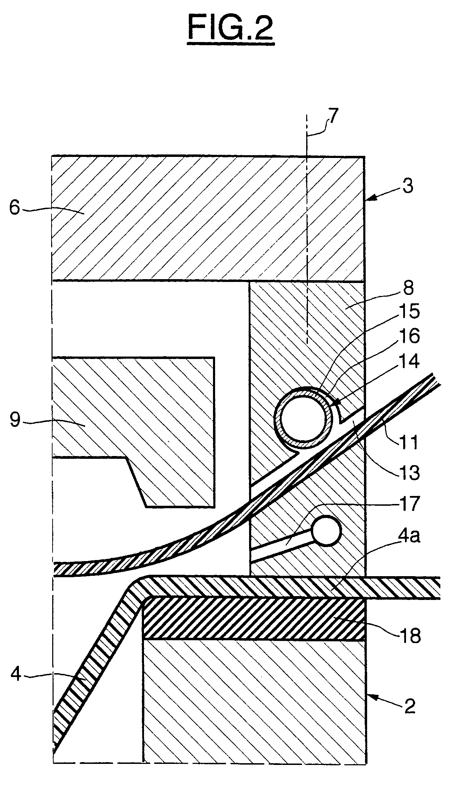

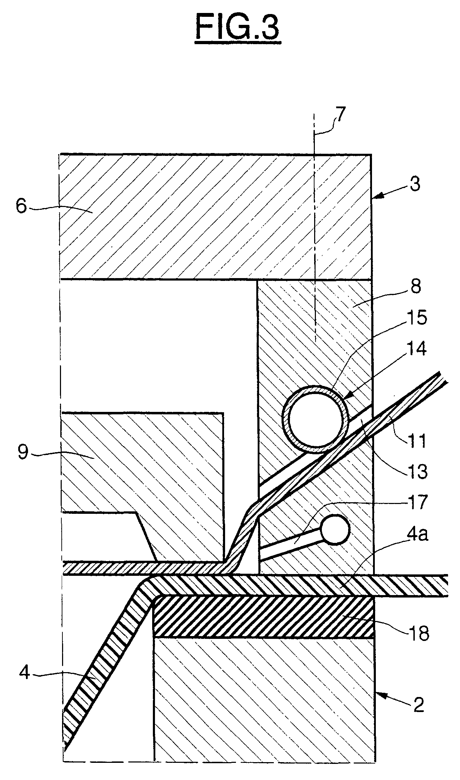

Tel que cela apparaît plus clairement sur les figures 2 et 3, le cadre 8 de la partie supérieure 3 du dispositif de soudage est traversé, au niveau de sa paroi située du côté d'amenée du film d'operculage 11, par une fente 13 d'une section (largeur et hauteur) supérieure à la section (largeur et épaisseur) du film d'operculage 11. Cette fente 13 est ici inclinée de haut en bas dans le sens d'amenée 12 du film 11 et débouche à l'intérieur du cadre 8 à faible distance au-dessus du bord inférieur de ce dernier. A la fente 13 est associé un moyen d'obturation et de blocage 14 constitué par un tuyau gonflable 15, par exemple en caoutchouc, monté dans un trou 16 ménagé dans la paroi du cadre 8 en s'étendant sur toute la largeur de la fente 13, de telle manière que la fente 13 soit sécante au trou 16. La hauteur de la fente 13, le diamètre et la position du trou 16 par rapport à la fente 13 et les caractéristiques du tuyau gonflable (nature, élasticité, pression de gonflage, etc.) sont choisis de manière que lorsque le tuyau 15 n'est pas gonflé, il permet le passage du film d'operculage 11 dans la fente 13, tandis que lorsqu'il est gonflé, il bloque le film d'operculage 11 dans la fente 13 et obture cette dernière de façon étanche.

Le cadre 8 comporte par ailleurs, dans la même paroi, entre la fente 13 et le bord inférieur de cette paroi, une ou plusieurs buses 17 débouchant à l'intérieur du cadre 8 en dessous du débouché de la fente 13. Ces buses 17 peuvent être reliées à une source de vide et/ou une source de gaz non représentées, de manière à permettre, avant operculage de la barquette 4, la création d'un vide et/ou d'une atmosphère de gaz dans la barquette, pendant l'obturation de la fente 13 par le tuyau gonflable 15.

Le moyen d'obturation et de blocage 14 qui fait partie intégrante du cadre 8 de la partie supérieure 3 du dispositif d'operculage permet ainsi, en combinaison avec des joints d'étanchéité 18 prévus de façon connue en soi sur les bords supérieurs de la partie inférieure 4, d'assurer que les deux parties 2 et 3 du dispositif définissent, autour de la barquette 4 à operculer, une enceinte parfaitement étanche dans laquelle il est possible de créer une atmosphère parfaitement contrôlée (mise sous vide et/ou ré-injection de gaz).

Il est par ailleurs possible de prévoir, dans le cadre de l'invention, sur le cadre 8, en plus ou à la place des buses 17 d'extraction et/ou d'injection de gaz, un ou plusieurs orifices ou becs, de préférence rétractables, pour le remplissage des barquettes avec le produit à emballer. Il est ainsi par exemple possible, au poste d'operculage, de remplir les barquettes complètement, c'est-à-dire à ras bords, sans risque de débordement ou de souillure des bords des barquettes, comme cela serait le cas sur les operculeuses ou thermoformeuses-operculeuses connues sur lesquelles le remplissage des barquettes s'effectue à un poste situé en amont du poste d'operculage, ce qui implique un transfert des barquettes remplies non encore operculées d'un poste à un autre. De tels orifices ou becs permettent également d'introduire dans les barquettes d'autres fluides, par exemple des produits additionnels liquides, pâteux ou en poudre, à répandre à la surface du produit déjà contenu dans les barquettes.

En cas de remplissage des barquettes au poste d'operculage conforme à l'invention, l'opération de remplissage-operculage peut se faire en plusieurs étapes, et peut comprendre d'abord une soudure partielle du film sur la barquette, ne laissant de passages que pour les becs de remplissage, puis le remplissage de la barquette par les becs et, après retrait des becs, la soudure définitive de tous les passages non encore soudés.

Il va de soi que le mode de réalisation représenté et décrit n' a été donné qu'à titre d'exemple indicatif et non limitatif et que de nombreuses modifications et variantes sont possibles dans le cadre de l'invention. Ainsi, le moyen d'obturation et de blocage 14, au lieu d'être constitué par un tuyau gonflable, pourrait être constitué par tout autre moyen susceptible d'assumer la même fonction, par exemple des systèmes pivotants, à excentrique, etc. Le tuyau gonflable 15 se distingue par la simplicité de sa structure et de son actionnement, et par sa grande efficacité. Le moyen 14, au lieu de se trouver au-dessus de la fente 13, pourrait également être situé en dessous de la fente 13, ou de part et d'autre de cette dernière.

La structure et la forme des deux parties 2 et 3 du dispositif d'operculage peuvent être modifiées en fonction de la nature et de la forme des récipients à operculer qui peuvent être des récipients autres que des barquettes, par exemple des pots. Enfin, le dispositif d'operculage, au lieu de faire partie d'une thermoformeuse-operculeuse sur laquelle les barquettes sont formées dans une bande de matériau et sont remplies et operculées avant d'être séparées les unes des autres, est utilisable également sur une operculeuse qui est alimentée en barquettes déjà formées.

En plus de l'obturation de la fente 13, le moyen 14 assure également le blocage du film d'operculage 11 et remplit ainsi une fonction qui implique, sur les operculeuses connues, l'utilisation d'un dispositif additionnel.

Enfin, le dispositif d'operculage conforme à l'invention permet, par rapport aux dispositifs connus sur lesquels la réinjection de gaz s'effectue par des trous pratiqués dans le film d'operculage, sur les côtés de ce dernier, donc dans une partie de film perdue, une économie de film d'operculage qui peut être de l'ordre de 10%, voire plus.

## Revendications

1. Dispositif d'operculage pour une machine de conditionnement sous atmosphère contrôlée de produits dans des récipients tels que des barquettes, pots et emballages analogues operculés par un film, comprenant une partie supérieure formant cloche, munie d'une tête de soudage, et une partie inférieure formant cuve, la partie inférieure recevant au moins un récipient à operculer et coopérant avec la partie supérieure de manière à définir, autour du récipient à operculer, une enceinte dans laquelle du film d'operculage continu préalablement amené sur le récipient est soudé sur le récipient par la tête de soudage de la partie supérieure, **caractérisé par le fait que** la partie supérieure (3) comprend, dans une paroi (8), sur le côté d'amenée du film d'operculage (11), une fente de passage (13) pour le film d'operculage, des moyens (14) d'obturation et de blocage à actionnement commandé pour obturer ladite fente et bloquer le film par rapport à la partie supérieure, et des moyens (17) d'introduction et/ou d'extraction de fluide, débouchant à l'intérieur de l'enceinte entre ladite fente (13) et le bord inférieur de la paroi (8).

2. Dispositif suivant la revendication 1, **caractérisé par le fait que** lesdits moyens d'obturation et de blocage (14) comprennent un tuyau gonflable (15) disposé sur ladite paroi d'un côté de ladite fente (13).

3. Dispositif suivant la revendication 2, **caractérisé par le fait que** ledit tuyau gonflable (15) est monté dans un trou (16) s'étendant sur toute la largeur de ladite fente (13) de manière que ladite fente soit sécante dudit trou.

4. Dispositif suivant la revendication 1, **caractérisé par le fait que** lesdits moyens d'introduction et/ou d'extraction de fluide comprennent des orifices d'injection de gaz.

5. Dispositif suivant la revendication 1 ou 4, **caractérisé par le fait que** lesdits moyens d'introduction et/ou d'extraction de fluide comprennent des orifices d'extraction de gaz.

6. Dispositif suivant l'une quelconque des revendications 1, 4 et 5, **caractérisé par le fait que** lesdits moyens d'introduction et/ou d'extraction de fluide comprennent au moins un bec de remplissage du récipient.

7. Dispositif suivant l'une quelconque des revendications précédentes, **caractérisé par le fait que** ladite paroi fait partie d'un cadre (8) rapporté sur la partie supérieure (3) en entourant la tête de soudage (9).

## Patentansprüche

1. Versiegelungsvorrichtung für einen Maschine zum Abpacken von Produkten unter einer kontrollierten Atmosphäre in Behältern, Schalen, Töpfen oder dergleichen durch eine Folie versiegelten Behältern, mit einem glockenförmigen Oberteil, das mit einem Schweißkopf versehen ist und einem trogförmigen Unterteil, wobei das Unterteil wenigstens einen zu versiegelnden Behälter aufnimmt und mit dem Oberteil derart zusammenwirkt, dass rings um den zu versiegelnden Behälter ein Randbereich ausgebildet wird, in dem eine vorher auf den Behälter aufgelegte, durchgehende Versiegelungsfolie auf den Behälter durch den Schweißkopf des Oberteils aufgeschweißt wird, **dadurch gekennzeichnet, dass** das Oberteil (3) in einer Wand (8) auf der Zufuhrseite der Versiegelungsfolie (11) einen Durchlassschlitz (13) für die Versiegelungsfolie, gesteuert betätigbare Verschluss- und Klemmmittel zum Verschließen des Schlitzes und zum Festhalten der Folie bezüglich des Oberteils und Fluideinführ- und/oder Absaugmittel (17) aufweist, die innerhalb des Randbereiches zwischen den Schlitz (13) und der Unterkanten der Wand (8) münden.

2. Vorrichtung nach Anspruch 1, **dadurch gekennzeichnet, dass** die Verschluss- und Klemmmittel (14) einen aufweitbaren Schlauch (15) aufweisen, der auf der Wand auf einer Seite des Schlitzes (13) angeordnet ist.

3. Vorrichtung nach Anspruch 2, **dadurch gekennzeichnet, dass** der aufweitbare Schlauch (15) in einer Ausnehmung (16) angeordnet ist, die sich über die ganze Breite des Schlitzes derart erstreckt, dass der Schlitz die Ausnehmung anschneidet.

4. Vorrichtung nach Anspruch 1, **dadurch gekennzeichnet, dass** die Fluideinführ- und/oder Absaugmittel Gasinjektionsöffnungen aufweisen.

5. Vorrichtung nach Anspurch 1 oder 4, **dadurch gekennzeichnet, dass** die Fluideinführ- und/oder Absaugmittel Gasabsaugöffnungen aufweisen.

6. Vorrichtung nach einem der Ansprüche 1, 4 und 5, **dadurch gekennzeichnet, dass** die Fluideinführ- und/oder Absaugmittel wenigstens einen Füllstutzen für den Behälter aufweisen.

7. Vorrichtung nach einem der vorhergehenden Ansprüche, **dadurch gekennzeichnet, dass** die Wand Teil eines auf das Oberteil (3)aufgesetzten den Schweißkopf (9) umschließenden Rahmens (8) ist.

## Claims

1. Sealing device for a macnine for packaging products under a controlled atmosphere in containers such as trays, pots and similar packages sealed with a film, comprising a top part forming a bell, provided with a welding head, and a bottom part forming a pan, the bottom part receiving at least one container to be sealed and interacting with the top part so as to define, around the container to be sealed, an enclosure in which the continuous sealing film brought beforehand onto the container is welded to the container by the welding head of the top part, **characterized in that** the top part (3) comprises, in one wall (8), on the side where the sealing film (11) is brought in, a slot (13) through which the sealing film passes, controlled-actuation closure and immobilization means (14), for closing off said slot and for immobilizing the film with respect to the top part, and means (17) for the introduction and/or extraction of fluid, emerging inside the enclosure between said slot (13) and the bottom edge of the wall (8).

2. Device according to Claim 1, **characterized in that** said closure and immobilization means (14) comprise an inflatable hose (15) placed in said wall on one side of said slot (13).

3. Device according to Claim 2, **characterized in that** said inflatable hose (15) is mounted in a hole (16) extending over the entire width of said slot (13) so that said slot is secant to said hole.

4. Device according to Claim 1, **characterized in that** said means for the introduction and/or extraction of fluid comprise gas injection orifices.

5. Device according to Claim 1 or 4, **characterized in that** said means for the introduction and/or extraction of fluid comprise gas extraction orifices.

6. Device according to any one of Claims 1, 4 and 5, **characterized in that** said means for the introduction and/or extraction of fluid comprise at least one spout for filling the container.

7. Device according to any one of the preceding claims, **characterized in that** said wall forms part of a frame (8) attached to the top part (3) surrounding the welding head (9).
